Europäisches Patentamt

(19) European Patent Office

Office européen des brevets

(11) Publication number: **0 010 804**
**A1**

## (12) EUROPEAN PATENT APPLICATION

(21) Application number: **79200606.6**

(22) Date of filing: **22.10.79**

(51) Int. Cl.³: **A 23 F 5/48**

(30) Priority: **03.11.78 US 957384**

(43) Date of publication of application: **14.05.80**
**Bulletin 80/10**

(84) Designated Contracting States: **BE DE FR GB IT NL**

(71) Applicant: **The Procter & Gamble Company, 301 East Sixth Street, Cincinnati, Ohio 45202 (US)**

(72) Inventor: **Pultinas, Jr. Edmund Paul, 6016 Monticello Avenue, Cincinnati, Ohio 45224 (US)**

(74) Representative: **Gibson, Tony Nicholas et al, Procter & Gamble European Technical Center Temselaan 100, B-1820 Strombeek-Bever (BE)**

(54) Highly aromatized coffee products and method for producing same.

(57) A highly aromatized coffee product in the form of grinder gas aroma concentrates or combinations of aroma concentrates and substantially non-aromatized, conventional coffee materials is disclosed herein. The aroma concentrates are formed by adsorbing grinder gas from roasted coffee beans onto a suitable aroma substrate, e.g. roast and ground coffee, roasted malt, barley, chicory, etc. The substrate is maintained at cryogenic temperatures preferably utilizing liquid nitrogen. The highly aromatized coffee products thus produced are perceived by the user to have aroma intensities substantially greater than those of conventional, substantially non-aromatized coffee materials.

# HIGHLY AROMATIZED COFFEE PRODUCTS
# AND METHOD FOR PRODUCING SAME

A major and recurring theme in the coffee industry is the problem of aroma and flavor quality of finished coffee products, such as roast and ground coffee, flaked coffee, instant coffee, decaffeinated coffee and the like. The important constituents which make up the aroma and flavor character of the coffee product are usually extremely volatile compounds. Because of their volatility, substantial amounts of such constituents are lost during coffee processing. For example, the grinding of roasted coffee produces a gas commonly referred to as grinder gas which is often not utilized in conventional roast and ground coffee processes. Thus, important aroma and flavor volatiles are lost from the roast and ground coffee. The milling process utilized in the flaking of roasted coffee provides a coffee of increased extractability but usually results in a flaked coffee product having a low initial aroma intensity.

A number of different approaches for improving the aroma qualities of these various types of coffee products are disclosed in the prior art. The first approach has been to use gases produced during the roasting of coffee as an aroma source. For example, the patent to McCrosson, U.S. 2,087,602, issued July 20, 1937, discloses a process for enriching the ultimate aroma and flavor of a finished coffee product by drenching and thus impregnating roast and ground coffee with the aroma-laden gases liberated during green bean roasting in a sealed coffee roaster. Similarly, the patent to Wendt et al., U.S. 2,156,212, issued April 25, 1939, discloses a process wherein vapors from the roaster gases are selected and purified and then contacted with various substrates including liquid coffee concentrate, coffee powder and roasted coffee so that the coffee product absorbs the desirable aromatic principles. However, the use of roaster gases for aroma enrichment is of questionable value because such gases contain undesirable as well as desirable aroma materials. Indeed, this fact is recognized in Wendt et al. who finds it necessary to select and purify the roaster gases prior to contacting the substrate.

A second approach for improving the overall aroma quality of the coffee product has been to blend a major portion of aroma-poor coffees with a lesser portion of more aroma-rich coffees. For example, in the patent to Joffe, U.S. 3,615,667, issued Oct. 26, 1971, flaked low and intermediate grade coffees which are poor in aroma quality are combined with a lesser portion of ground high grade coffees having good aroma qualities in order to compensate for the lower flavor and aroma intensity and quality of the lower grade flaked coffees. However, such mixtures essentially trade off increased initial aroma for increased extractability.

A third approach has been the cold aromatization of various coffee products, especially instant coffee. For example, the patent to Johnston, U.S. 2,306,061, issued Dec. 12, 1942, discloses a method whereby roasted coffee is ground and the compounds or vapors released during grinding are brought into contact with a coffee or beverage extract, e.g. a soluble coffee, at relatively low temperatures, from about -15°C to about -70°C. However, as noted in the patent to Patel et al, U.S. 3,823,241, issued July 9, 1974, the initial aromatization of a soluble coffee is usually lost within short periods of time.

In Patel et al. a process is disclosed for improving the cryogenic aromatization of instant coffee by transferring the aroma of roast and ground coffee onto a coffee aroma absorbent material such as instant coffee having carrier oils such as coffee oils sprayed thereon. The absorbent is cooled to a temperature of at least -40°F and preferably -150°F. However, the use of a carrier oil can decrease the release of aroma constituents absorbed by the substrate and can also create an unsightly and unflavorful residue in the beverage.

The patent to Mahlmann, U.S. 3,873,746, issued March 25, 1975, discloses a fourth approach for aromatizing coffee by contacting chilled roast and ground coffee with the evaporative vapors of a synthetic coffee aroma composition. However, as admitted by Mahlmann, a synthetic coffee aroma approaches, but is not the same as, natural coffee aroma.

A fifth approach is the cold processing of a portion or all of the coffee, e.g. quenching the coffee beans immediately after roasting with liquid nitrogen, and grinding at temperatures below 40°F. However, such operations require special equipment and are more expensive than conventional coffee processing.

The success of any method of improving the aroma character of a coffee product will first depend on how well the aroma of the ultimate product is perceived by the consumer. One factor is the quality of the aroma source used to improve the aroma character of the coffee product and of the beverage produced from it. A second and heretofore unrecognized factor is the qualitative effect of the aroma intensity of the coffee product produced.

Another important consideration in the success of the method herein is its efficiency and effectiveness. Thus, the ability to utilize aroma materials normally discarded during conventional processing of coffee materials is highly desirable.

It is therefore an object of the present invention to produce an aromatized coffee product having desirable aroma quality.

It is a further object of the present invention to provide an aromatized coffee product having an aroma intensity perceived to be more desirable than prior art coffee products.

It is a further object of the present invention to provide a process for producing such an aromatized product with an optimum efficiency without deviating significantly from conventional processing of coffee materials.

It is yet a further object of the present invention to provide a process for producing said aromatized coffee product employing materials normally not utilized during conventional coffee processing.

These and other objects of the present invention will become apparent in the description that follows.

## Disclosure of Invention

The present application discloses a novel, highly aromatized coffee product which can be utilized to prepare a coffee beverage.  The highly aromatized coffee product comprises a grinder gas aroma concentrate or a combination of a grinder gas aroma concentrate and a substantially non-aromatized coffee material. The grinder gas aroma concentrate comprises a suitable aroma substrate having adsorbed thereon a suitable grinder gas.  The highly aromatized coffee products of the present invention have aroma intensities which are perceived by the user as substantially greater and more desirable than those of conventional coffee materials.  Such a property is unexpected because, given the wide range of aroma content of conventional coffees, the perceived differences are relatively modest.  The grinder gas aroma concentrates of the present   invention are particularly useful in substantially improving the aroma characteristics of aroma-poor coffee materials when combined therewith. The highly aromatized coffee product of the present invention is further characterized by the fact that it is substantially free of carrier oils such as coffee oil.

The present application further discloses a process for producing these novel highly aromatized coffee products.  The process generally comprises contacting, with a suitable grinder gas, a suitable aroma substrate whose surface is exposed to the grinder gas at a temperature sufficiently low so that all or substantially all of the grinder gas is adsorbed or condensed onto the aroma substrate.

Within its broadest aspects, the highly aromatized coffee products of the present invention comprise as an important part thereof a grinder gas aroma concentrate.  As used in the present application, the term "grinder gas aroma concentrate" is defined as an aroma substrate having condensed or adsorbed thereon grinder gas in amounts according to the present invention. Materials encompassed within the term "aroma substrate" include roast and ground coffee, flaked coffee, decaffeinated coffee, roasted grains and mixtures thereof, but exclude instant or soluble coffee products.

As used in the present application, the term "grinder gas" is defined as those aroma and flavor volatiles liberated during and after the grinding of the roasted coffee bean.  Preferentially, the grinder gas is that gas drawn directly from the grinder but can include gas from such sources as flaking mills and coffee bins. This gas is preferred because it contains the richest and most intense source of those aroma and flavor constituents perceived by the user as most desirable.  Also, the utilization of this gas represents the recovery of material normally lost during conventional roast and ground coffee processing.

A variety of roast and ground coffee blends, including those which may be classified for convenience and simplification as low-grade, intermediate grade, and high-grade coffees can be used to generate the grinder gas. Suitable examples of low-grade coffees include the natural Robustas such as the Ivory Coast Robustas and Angola Robustas; and the Natural Arabicas such as the natural Perus and natural Ecuadors. Suitable intermediate-grade coffees include the natural Arabicas from Brazil such as Santos, Paranas and Minas; and natural Arabicas such as Ethiopians. Examples of high-grade coffees include the washed Arabicas such as Mexicans, Costa Ricans, Colombians, Kenyas and New Guineas. Other examples and blends thereof are known in the art and illustrated in, for example, U.S. Patent 3,615,667 (issued Oct. 26, 1971 to Joffe), incorporated herein by reference. If desirable, decaffeinated coffees can also be used.

The green beans are roasted in a conventional manner. See, for example, "Coffee Processing Technology", Sivetz & Foote, The Avi Publishing Co., Westport, Connecticut, 1963, Vol. II, pages 203 to 239, for an illustration of coffee roasting techniques.

After developing the coffee flavor and aroma by roasting, the coffee bean is ground by crushing, rubbing, grating, cutting, tearing or any other method that will cause size reduction. During this comminution process, coffee gases including the desirable aroma volatiles are given off. It is these grinder gases which are collected for use herein.

The aroma substrate can be the roast and ground coffee from which the grinder gas was liberated, decaffeinated roast and ground coffee, flaked coffee or roasted grains.

Typically, decaffeination of coffee is accomplished by solvent extraction prior to the roasting of green coffee beans. Such decaffeination methods are well known in the art and illustrated in, for example, U.S. 3,671,263 (issued June 20, 1972 to Patel et al); U.S. 3,700,464 (issued October 24, 1972 to Patel et al); U.S. 3,700,465 (issued October 24, 1972 to Lawrence et al); and U.S. 3,671,262 (issued June 20, 1972 to Wolfson et al). See also Sivetz, ibid, pp. 207 to 278. Each of these references are incorporated herein by reference.

Roast and ground coffee which has been transformed into flaked coffee by roll milling roast and ground coffee is known in the art. Processes for preparing flaked coffee are disclosed in U.S. 3,615,667 to Joffe, issued Oct. 26, 1971, and in U.S. 3,660,106, issued to McSwiggin et al. May 2, 1972, incorporated herein by reference.

Grains such as sprouted barley, rye, corn and chicory can be roasted to form a product which when brewed form a coffee-like beverage. These roasted grains are also suitable substrates for aroma adsorption and can also be blended with the grinder gas aroma concentrate.

In its broadest aspects, the process of the present invention generally comprises contacting the desired aroma substrate with grinder gas until the actual aroma intensity of the substrate has reached the desired level.

In order to adsorb the grinder gas onto the aroma substrate it is necessary to equip the grinder to draw-off or collect the gases generated during grinding. Any conventional grinder is adapted in such a manner that the gases released during grinding are vented through ports or outlets and thereafter conveyed to the substrate. For optimum collection of the gases the grinder can be sealed. An inactive gas such as nitrogen or dry air can be passed through the grinder to increase the release of the grinder gases. A vacuum can be drawn on the grinder to enhance the recovery of the gases during the grinding process.

Any conventional grind setting can be used, i.e. coarse, regular, drip or fine. The finer the beans are ground, the more gases will be released.

The efficiency of the process of the present invention has been defined as the amount of roasted coffee needed to be ground in order to raise a substantially non-aromatized roast and ground coffee from an aroma intensity of about 45,000 G.C. counts as measured by gas chromatograph (described in detail below) to a highly aromatized roast and ground coffee product of about 100,000 G.C. counts. Utilizing the preceding definition of efficiency, the efficiency factor of the process of the present invention has been found to be on the order of about 15-25% for highly aromatized roast and ground coffee products. For example, using a gas draw-off rate of 2.2 CFM, a grinding rate of 500 lbs. per hour and a drip grind setting on the grinder, the process of the present invention has been able to operate at a 19% efficiency, i.e. 1 lb. of highly aromatized roast and ground coffee product per 5.3 lbs. of roasted coffee ground. It was found that no significant differences were noted in aroma intensity as measured by the gas chromatograph between the non-aromatized roast and ground coffee prepared under these conditions and roast and ground coffee prepared without removal of the grinder gas.

Higher efficiencies than those enumerated above are possible. However, consideration should be given to the quality of the coffee from which aroma is removed. Thus, efficiency is preferably balanced against the quality of the coffee ground to create an optimum process.

In a preferred embodiment of the process, grinder gas aroma concentrate is produced by passing

the grinder gas through a column of the desired substrate, a substantial portion, i.e. at least about 1/3, of the column being maintained at a temperature of about -100°F to -250°F. The aroma substrate is cooled by an external jacket of liquid nitrogen or similar cryogenic material. If desirable, a plurality of columns of substrate can be aromatized at the same time, the columns being arranged either sequentially, i.e. in series, or concurrently, i.e. in parallel. While other methods of aromatizing the substrate can be utilized, e.g. equilibrating the substrate with grinder gas frost or aromatized coffee oil not in physical contact with the substrate at temperatures ranging up to 70°F with or without positive pressure, the above-described method has been found to be the most efficient and to produce the most desirable aroma concentrate.

Due to the temperature of the grinder gas entering the column of aroma substrate, and the heat exchange properties of the column with the surrounding environment, the temperature of the column can vary from about 60°F at the top where the grinder gas enters to -290°F at the base of the column. However, a substantial portion of the column is usually maintained at a temperature of about -100°F to -250°F, especially toward the center of the column. Under these conditions, virtually all of the aroma volatiles of the grinder gas are collected on the substrate.

Factors affecting the adsorption of grinder gas onto the substrate include the specific surface area of the aroma substrate presented to the grinder gas, the total amount of the substrate used as the adsorption medium, and the temperature at which the substrate and the grinder gas are kept. Generally, as the surface area of the substrate is increased, i.e. the grind changed from coarse to fine, and as temperature of the substrate decreases, the adsorption of the grinder gas is increased.

By utilizing the process of the present invention, a generally continuous method for aromatization by passing aroma vapors through a fixed bed of aroma substrate at substantially cryogenic temperatures is realized. Also, the process of the present invention permits the practical separation of $CO_2$ from the grinder gas usually without the need of a separate equilibration step normally required for the removal of $CO_2$ if the grinder gas is condensed as a frost and then added to the product to be aromatized.

Upon removal of the aromatized substrate from the column, it has been found that the adsorbed grinder gas is normally distributed in a non-uniform manner. The distribution of the grinder gas on the substrate is generally dependent on flow rates, volatility of the aroma components and the temperature profile in the column. Consequently, a mixing step with precautions to minimize aroma loss from the substrate is usually necessary to produce a uniform aroma concentrate.

The grinder gas aroma concentrates produced according to the present invention have very high actual or physical aroma intensity.

A suitable technique for measuring actual aroma intensity of the aroma concentrates and highly aromatized coffee products of the present invention is gas chromatography. A flame ionization gas chromatograph analytical instrument measures the total content of organic compounds in a gas head space or void space sample from packaged coffee on a scale of relative intensity. The scale is graduated in microvolt-seconds (referred to herein as "G.C. counts") which is a measure of the area under the intensity curve, and the result is reported as an integration of the total area under the curve in total microvolt-seconds ("total counts").

Utilizing this technique, it has been found that grinder gas aroma concentrates made by the above-described process have an aroma intensity substantially in excess of the aroma intensity of the conventionally processed substrates. For instance, conventional roast and ground coffee has an aroma intensity of about 35,000 to about 50,000 G.C. counts, and conventional flaked coffee an aroma intensity of about 10,000 to about 20,000 G.C. counts. By contrast, conventional roast and ground coffee can be aromatized with grinder gas to amounts exceeding, for example, 60,000 G.C. counts, and flaked coffees aromatized to amounts exceeding 42,000 G.C. counts. Grinder gas aroma concentrates having actual aroma intensities of about 400,000 to about 1,000,000 G.C. counts are those normally produced by this process. Grinder gas aroma concentrates in excess of 1,000,000 G.C. counts are within the scope of the present invention. Direct, accurate measurement of aroma levels above 1,000,000 is not possible with current equipment.

From the economic standpoint, it is desirable to adsorb enough grinder gas on the aroma substrate to produce a product with an aroma intensity in excess of 400,000 G.C. counts. This grinder gas aroma concentrate is then diluted with conventionally processed coffee materials. Preferably, from 1% to 20% of the grinder gas aroma concentrate is blended with 80% to 99% of the conventionally processed coffee materials.

As used in the present application, the term "substantially non-aromatized coffee materials" includes roast and ground coffee, flaked coffee, decaffeinated coffee, roast and ground grains, and mixtures thereof. These materials will also be generally referred to as conventional coffee materials, i.e. materials produced according to conventional coffee processes.

The grinder gas aroma concentrate and substantially non-aromatized coffee materials can be mixed, blended or otherwise combined, to produce highly aromatized coffee products in a ratio sufficient to create the desired actual aroma intensity. Extremely satisfactory highly aromatized roast and ground coffee products having actual aroma intensities of from about 60,000 to about 200,000 G.C. counts have been produced according to the present invention. Such highly aromatized coffee products have aroma intensities which are perceived by experts to be much greater than that of conventional coffee materials.

A coffee product, particularly an aromatized roast and ground coffee, having a G.C. count much lower than about 60,000 is generally not perceived to be that much greater in aroma intensity than conventional coffee materials. A coffee product, particularly an aromatized roast and ground coffee, having a G.C. count greater than 200,000 is generally perceived by experts to have an aroma intensity so intense as to be undesirable. Expert and consumer panel results indicate that a range of about 75,000 to about 100,000 G.C. counts has the most preferred coffee-like character. In the case of highly aromatized flaked coffee products, however, coffee products as low as about 42,000 G.C. counts have been perceived by experts to be substantially greater in aroma intensity than conventional coffee materials, e.g. roast and ground coffee.

An important and distinguishing characteristic of such highly aromatized coffee products is that their perceived aroma intensity is far greater than that of conventional coffee materials when compared to the absolute increase in actual aroma intensity. For instance, a conventional roast and ground coffee with an aroma intensity of about 45,000 G.C. counts is compared with conventional flaked coffee with an aroma intensity of about 15,000 G.C. counts. A panel of experts perceived the roast and ground coffee to be only 20% more intense in aroma than the flaked coffee, whereas it is actually 200% more intense in aroma. A highly aromatized roast and ground coffee product having an actual physical aroma intensity of

0010804

69,000 G.C. counts was compared with a roast and ground product having an intensity of 42,000 G.C. counts. This aromatized coffee was perceived by experts to be approximately 45% more intense than the non-aromatized conventional roast and ground coffee, whereas it is actually 65% more intense.

Another way to quantify the substantially greater perceived aroma intensity of the coffee products of the present invention is by reference to Steven's law, see S. S. Stevens, Science, Vol. 118, page 576 (1953). According to Steven's law, the relationship between the perceived intensity of a stimulus, e.g. coffee aroma, and the physical intensity of the stimulus is defined by a power function

$$P = KA^n$$

where P is the perceived intensity, A is the physical intensity, K a constant and n is an exponent which is related to the nature of the stimulus being perceived. For exponents less than one, a relative increase in perceived intensity is less than the corresponding increase in physical stimulus, e.g. aroma content. For exponents greater than one, a relative increase in perceived intensity is greater than the corresponding increase in physical stimulus. Exponents of one indicate a direct correlation of perceived intensity and physical stimulus. For example, for an exponent of one a 50% increase in perceived intensity would correspond to a 50% increase in aroma intensity, i.e. G.C. counts. For an exponent of .5 a 50% increase in aroma intensity would only result in a 22% increased in perceived intensity. The exponent for aroma perception is generally less than one.

A plot of the ln of P versus the ln of A will result in a line having a slope n. If highly aromatized coffee products had perceived intensities on the order of conventional non-aromatized coffee materials, it would be expected that perceived intensities of the highly aromatized coffee products would fall on a line extrapolated from that defined by conventional, non-aromatized coffee materials. However, it has been found that when highly aromatized roast and ground coffee products according to the present invention are compared with conventional, substantially non-aromatized flaked and roast and ground coffee materials, the perceived intensity of the highly aromatized roast and ground products lies above the slope of the line defined by conventional, non-aromatized flaked and roast and ground coffee materials and the slope is larger. In other words, if coffee aroma perception was merely a quantitative phenomenon, the increased perception of aroma from added aroma (as measured by G.C. counts) would be far less than is observed for the highly aromatized products of the present invention.

While not wishing to be bound by any particular theory as to the unexpected properties of the highly aromatized coffee products of the present invention, it is believed that the significantly increased perceived intensity for these highly aromatized coffee products is due to the fact that the aroma and flavor volatiles which are recovered during grinding of the roasted coffee bean are perceived as more intense and coffee-like than the aroma typically available in the head space of conventionally processed coffee materials. Thus, by recovering and concentrating this grinder gas on an aroma substrate to produce a grinder gas aroma concentrate and preferably combining it with a conventional, substantially non-aromatized coffee material, a highly aromatized coffee product is produced which is perceived to be more intense and coffee-like than conventional, substantially non-aromatized coffee materials. Also, by recovering all the aroma volatiles, aroma compounds which have traditionally been lost in conventional processing are preferentially added back. The present invention has particular applicability for aroma-poor coffee materials such as flaked coffee.

The highly aromatized coffee products of the present invention are further characterized by the fact that they are substantially free of carrier or added absorbant oil, such as coffee oil. It has been found that the grinder gas aroma concentrates according to the present invention can be produced satisfactorily without the use of such oils. Thus, the problems of decreased aroma release and objectionable residues occasioned by the use of such oils is avoided in the highly aromatized coffee products of the present invention.

While it is possible to package the aromatized concentrate from the column as is, it is usually desirable to combine a significantly smaller amount, e.g. 1 - 20%, of the aromatized concentrate with the substantially non-aromatized, conventionally produced coffee materials. A preferred method for combining the aromatized-non-aromatized mixture is to first place the aromatized concentrate at the bottom of the container. It is extremely desirable to keep this aromatized concentrate below 0°F in order to insure that the aroma volatiles are not lost from the substrate unnecessarily. Next, the substantially non-aromatized coffee material is placed in the container on top of the aromatized concentrate and the container sealed. The aroma volatiles from the aromatized concentrate pass through the substantially non-aromatized coffee materials and equilibrate with the substantially non-aromatized coffee materials. On repeated package openings, the head space above the aromatized concentrate and the substantially non-aromatized coffee material develops a pleasant high intensity aroma.

## Best Modes

The following examples are intended to exemplify the process and product and are not limiting thereof.

## G.C. Count Measurement

The chromatograph comprises a 36 inch chromosorb WAW (acid washed) 60/80 mesh column of 1/4 inch diameter and is housed in an oven section for isothermal temperature control. The column is packed with a uniform-sized solid called the solid support but is not coated with a non-volatile liquid (called the substrate) because the gas is not to be separated into individual compounds as is commonly done in this type of analysis. A hydrogen flame detector is used at the outlet port. An electrometer receives the output signal from the flame detector and amplifies it into a working input signal for an integration. The integrator both sends a display signal to a recorder to print out the response curve and electronically integrates the area under the curve.

The gas sample is injected into a heated injection port, and is immediately swept into the packed column by a carrier gas flow. The non-separated gas mixture is swept as a compact band through the column and into the detector. The detector then ionizes the sample and generates an electrical signal proportional to the concentration of the materials in the carrier gas. The ionized gases and carrier gas are then vented from the unit.

A Hewlett Packard gas chromatograph (Model 700), electrometer (Model 5771A), integrator (Model 3370A), and recorder (Model 7127D), range 0-5 mv. and temperature controller (Model 220) were used. Nitrogen pressure in the column is approximately 16 psig. Air pressure of 24 psig is used to flush out the detector. An oven temperature of 100°C is used and maintained to keep the volatiles vaporized.  The hydrogen is supplied from a gas cylinder regulated at 30 lbs. psig.

Each peak is measured in counts, the counts being first measured by the flame detector and then both integrated and recorded.  The number of counts for a particular component is directly proportional to the number of milligrams of that component in the vapor sample.

The recorder was synchronized with the integrator as follows:

1.  Calibration

A standard methane gas is used to precisely set the flame ionization response.  Prior to analyzing the samples, a 1 cc. sample of gas is obtained from a gas cylinder (0.5% by weight of $CH_4$).  The pressure of the gas as it is obtained is 4 psi.  The gas sample is syringed into the inlet port of gas chromato- graph.  The attenuation of the recorder is set at 8 while the range is 10.  The total counts when the procedure is repeated three times average between 145,000 to 150,000 total counts.  If the average is not within the specified range, the air flow rate is adjusted.

2.  Sample Analysis

The sample must be vacuum packed for at least 3 days at 75° ± 5°F before sampling.  The vacuum- sealed canister of coffee is punctured to remove the vacuum, then resealed and allowed to equilibrate at least one hour at 75° ± 5°F to allow vapor phase equilibration.

After equilibration, a 1 cc. sample of the aromatic atomosphere of the canister headspace/ voidspace is taken again using the same type of syringe as used for the standard methane sample.  The gas sample is then injected into the inlet port of the gas chromatograph.

-18-    0010804

## EXAMPLE I

Nineteen pounds of flaked coffee were added to a stainless steel adsorption column 4 ft. long and 6 in. diameter. The column was immersed in a bath containing liquid nitrogen and cooled to a temperature of -86°F at the top center of the column, -67°F at the middle center of the column, and -148°F at the base of the column. Grinder gases were generated by grinding a commercial coffee blend roasted to a color of 75 photovolts (see Sivetz, ibid, pages 132 to 137 for measuring the color of coffee by photoelectric devices) in a model 66 Gump grinder. The grinder was equipped with grinder gas take-off ports mounted beneath the grinding rolls and on the normalizer. Coffee was ground at the rate of 660 lbs./hr. Grinder gas was drawn off at a rate of 2.3 cubic ft./min. via a vacuum pump. The grinder gas was drawn into the adsorption column where the aroma volatiles were adsorbed onto the surface of the cold flaked coffee. During the run, the temperatures in the adsorption column ranged from -251°F to -148°F in the bottom center of the column, from -165°F to -67°F in the middle portion of the column, and from -86°F to 10°F at the top center of the column.

A second adsorption column similar to that of the first column was loaded with 19 lbs. of flaked coffee and cooled by immersion in the liquid nitrogen bath to temperatures of -156°F at the center base of the column, -102°F in the middle portion of the column, and -145°F at the top of the column. Grinding and grinder gas removal was done under the same conditions described with respect to the first column. Temperatures ranged from -238°F to -156°F at the center base of the column, from -154°F to -102°F at the center portion of the column, and from -145°F to 9°F at the top of the column. Grinding and collection of the vapors onto the flaked coffee was allowed to continue for approximately two hours.

At the completion of the entire run, approximately 2500 lbs. of coffee had been ground to aromatize the coffee in both columns. The aroma-laden coffee in the columns was removed, the chunks of frozen coffee were ground and the product was blended to help insure homogeneity. The intensity of the concentrate was determined by first blending about 5% of the concentrate with non-aromatized flaked coffee and then sealing the mixture under a vacuum. After allowing the mixture to equilibrate for at least 12 hours, the aroma headspace intensity was measured with the gas chromatograph. The intensity of a 6.6% concentrate/93.4% non-aromatized flaked coffee mixture in the first column was found to be 65,800 G.C. counts. The intensity of the concentrate was determined to be 780,000 G.C. counts.

The intensity of the 6.6% concentrate/93.4% non-aromatized flaked coffee mixture in the second column was found to be 61,250 G.C. counts. The intensity of the concentrate was determined to be 670,000 G.C. counts.

Mixtures of the flaked coffee concentrates of Example I with non-aromatized roast and ground coffee, decaffeinated coffee and roasted grains can be made with similar results.

EXAMPLE II

Nineteen lbs. of regular grind roast and ground coffee are added to a stainless steel adsorption column, 4 ft. long and 6 in. in diameter. The column is immersed in a bath containing liquid nitrogen and is cooled to temperatures at the top center of the column, the middle center of the column, and the base center of the column similar to those in Example I. Grinding and grinder gas removal is under the same conditions as in Example I. The temperature ranges at the center base of the column, the center portion of the column and the top of the column are similar to those in Example I. Grind time and grind rate are similar to those in Example I.  The aroma-laden roast and ground coffee in the column is treated as in Example I to insure homogeneity.  Five percent of the roast and ground concentrate is blended with non-aromatized roast and ground coffee before the aroma intensity of the concentrate and mixture is determined, as in Example I. Similar results are obtained.

The roast and ground concentrate according to Example II can also be blended with non-aromatized flaked coffee, decaffeinated coffee and roasted grain to obtain mixtures having similar aroma intensities. Also, decaffeinated coffee and roasted grains can be aromatized according to the preceding Example to produce aroma concentrates which can be blended with non-aromatized coffee materials.

## CLAIMS

1. A method for producing a grinder gas aroma concentrate, characterized by contacting an aroma substrate selected from the group consisting of roast and ground coffee, flaked coffee, decaffeinated coffee, roasted grains, and mixtures thereof with grinder gas, wherein a substantial portion of the aroma substrate is maintained at a temperature below about $-100^{\circ}F$, such that the grinder gas is adsorbed onto the aroma substrate.

2. A method according to Claim 1 characterized in that the aroma intensity of the aroma concentrate is at least 42,000 G.C. counts.

3. A method according to Claim 2 characterized in that the aroma intensity of the aroma concentrate is from 400,000 to 1,000,000 G.C. counts.

4. A method according to any of Claims 1 to 3 characterized in that the temperature of a substantial portion of the aroma substrate is from $-100^{\circ}F$ to $-250^{\circ}F$.

5. A method according to any preceding Claim characterized in that the aroma substrate is arranged in a column and wherein said contacting step comprises passing the grinder gas through the column of the aroma substrate.

6. A highly aromatized coffee product characterized in that it comprises a grinder gas aroma concentrate consisting essentially of an aroma substrate selected from the group consisting of roast and ground coffee, flaked coffee, decaffeinated coffee, roasted grains and mixtures thereof, said aroma substrate having grinder gas adsorbed thereon in an amount sufficient to create in said coffee product a perceived aroma intensity substantially greater than that of a substantially non-aromatized coffee material.

7. A coffee product according to Claim 6 characterized in that said product is a combination of said aroma concentrate and a substantially non-aromatized coffee material.

8. A coffee product according to Claim 7 characterized in that said aroma substrate is roast and ground coffee and wherein said substantially non-aromatized coffee material is roast and ground coffee.

9. A coffee product accroding to any of Claims 6 to 8 characterized by having an aroma intensity of from 60,000 to 200,000 G.C. counts.

10. A coffee product according to Claim 7 characterized in that said aroma substrate is flaked coffee, wherein said coffee material is selected from the group consisting of flaked coffee, roast and ground coffee and mixtures thereof, and wherein said coffee product has an aroma intensity of at least 42,000 G.C. counts.

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| D | US - A - 3 823 241 (J. PATEL et al.)<br>* Claim 1; column 3, lines 26 - 47 *<br><br>-- | 1,4 | A 23 F 5/48 |
| D | US - A - 2 306 061 (W. JOHNSTON)<br>* Claims 1-7 *<br><br>-- | 1 | |
| A | US - A - 4 044 167 (M. JOLLY et al.) | | **TECHNICAL FIELDS SEARCHED (Int.Cl. ³)** |
| A | US - A - 3 836 682 (S. YADLOWSKY) | | |
| A | US - A - 3 809 766 (R. STOLZ) | | A 23 F 5/48<br>A 23 F 5/46<br>A 23 F 5/08 |
| A | DE - B - 1 032 077 (H. STOSIUS)<br><br>----- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-02-1980 | DESMEDT |

EPO Form 1503.1   06.78